# EUROPEAN PATENT SPECIFICATION

(11) **EP 2 961 015 B1**
(45) Date of publication and mention of the grant of the patent: **21.11.2018**
(21) Application number: 14174790.7
(22) Date of filing: 27.06.2014
(51) Int. Cl.: H02B 13/045

(54) **A coupler member for coupling together the casings of two gas-insulated electrical elements**
Kopplungselement zum Zusammenkoppeln der Gehäuse von zwei gasisolierten elektrischen Elementen
Élément de couplage permettant de coupler les enveloppes de deux éléments électriques isolés par gaz

(43) Date of publication of application: 30.12.2015
(73) Proprietor: General Electric Technology GmbH, 5400 Baden (CH)
(72) Inventor: Treier, Lukas, 5043 HOLZIKEN (CH)
(74) Representative: Fischer, Michael Maria

(56) References cited:
- CH-A- 500 605
- DE-C1- 19 815 151
- DE-U1- 9 419 407
- FR-A1- 2 407 586

## Description

### TECHNICAL FIELD

The invention relates to the leaktight junction point between two portions or sections of a casing of an enclosure of a gas-insulated electrical substation that may be single-phase or three-phase.

### PRIOR ART

A gas-insulated electrical substation, generally referred to by the acronym GIS (Gas Insulated Substation), is a substation comprising a casing enclosing various pieces of electrical equipment.

That casing, which is typically made of metal, is leaktight and contains a pressurized gas such as SF₆, which is dielectric, i.e. insulating, in order to electrically insulate the equipment it contains from the outside environment. That equipment, which is at very high voltage, consists in particular of conductive busbars, circuit breakers, and/or disconnecter switches operating at high or medium voltage.

In such an installation, connection of a conductive busbar to a piece of electrical equipment is provided by a contact ring or sheath that surrounds the end of the busbar and a connection element for connecting the pieces of equipment electrically to each other, the connection element being located in line with the busbar while being spaced apart therefrom.

In complementary manner, a coupler member connects the portion of casing surrounding the conductive busbar to the portion of casing surrounding the electrical equipment in leaktight manner.

That coupler member, which is typically cylindrical, must be detachable in order to give access to the connection ring in order, for example, to disconnect the equipment, and it must also be removable in order to be removed when the equipment itself needs to be removed from the installation. A coupler is known from FR2407586 A1, that discloses the features of the preamble of claim 1.

A known solution consists in using a coupler member in the form of a flexible bellows having one end fastened to one of the casing portions by a flange. Access to the electrical connection connecting the busbar to the equipment then consists in detaching the flange in question and in compressing the bellows. The bellows can be removed by detaching its opposite end, which may likewise include a detachable flange.

Such a coupler member is expensive since it must be able to withstand internal pressure, ensure leaktight junction points, and be detachable, if possible in reversible manner. Finally, use of a flexible bellows is suitable, but the cost remains high.

The aim of the invention is to propose a solution for overcoming that drawback.

### SUMMARY OF THE INVENTION

To this end, the invention provides a coupler member for coupling together first and second gas-insulated electrical elements, respectively including a first casing and a second casing, in order to connect these casings to each other in leaktight manner, while being detachable, said coupler member including a socket fitted with leaktight fastener means for fastening to the first casing and a sleeve fitted with leaktight fastener means for fastening to the second casing, the socket and the sleeve both being bodies of revolution, the sleeve being partially engaged in the socket so as to be movable in translation in said socket along a main axis, between a closed, deployed position in which it is fastened to the second casing and an open, retracted position in which it is spaced apart from the second casing, the socket presenting a free end comprising an inner circular edge provided with a groove in which a sealing gasket is housed, said groove being defined by a plane end wall in the form of an annulus, of orientation that is perpendicular to the main axis, and by a flank constituting a surface of revolution about the main axis, the free end of the socket being fitted with a plate in the form of a ring having clamping screws passing therethrough that are parallel with the main axis and screwed into the free end of the socket in order to close the groove and to compress the gasket in said groove so that it deploys radially while bearing against the flank and against the sleeve.

In this configuration, the coupler member presents a length that is adjustable while being leaktight, without presenting the complexity and the cost of a flexible bellows type member.

The invention also relates to a member defined in this way, wherein the flank of the groove has a conical shape giving said groove a tapered section that narrows towards its end wall.

The invention also relates to a member defined in this way, wherein the gasket presents a section comprising a flared portion, and is engaged in the tapered groove so that its flared portion faces the end wall of the groove.

The invention also relates to a member defined in this way, wherein the flared portion of the gasket comprises two lips coming to bear against the movable sleeve and against the flank of the groove.

### BRIEF DESCRIPTION OF THE DRAWINGS

- Figure 1 is a side section view of the coupler member of the invention, which is deployed to connect two enclosure portions to each other in leaktight manner;
- Figure 2 is a side section view of the coupler member of the invention, which is retracted in order to give access to the electrical connection members that it surrounds;
- Figure 3 is a section view in perspective of the gasket fitted to the coupler member of the invention;
- Figure 4 is a detailed view of the sealing gasket mounted in the coupler member of the invention; and
- Figure 5 is a detailed view of the sealing gasket mounted in the coupler member of the invention, once it is installed.

### DETAILED DESCRIPTION OF PARTICULAR EMBODIMENTS

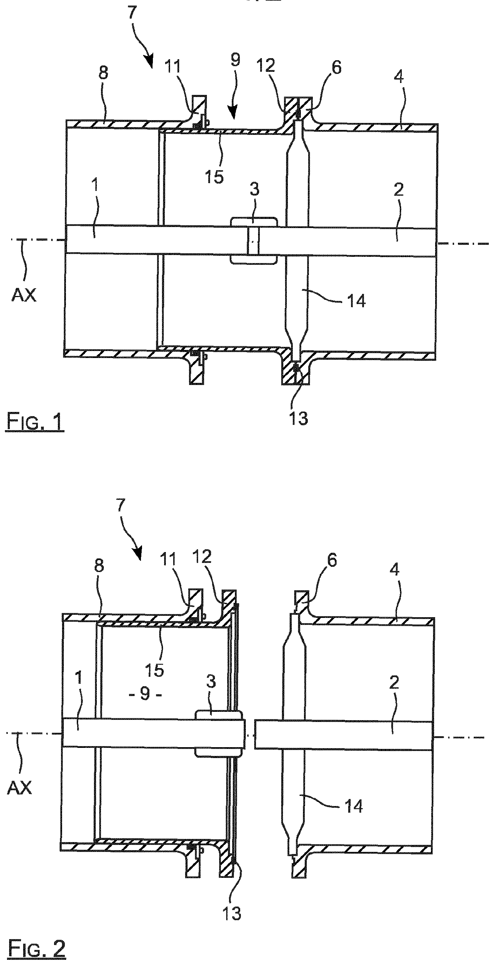

The coupler member of the invention that appears in Figures 1 and 2 surrounds an electrical connection via which a conductive busbar 1 is electrically connected to a connection element 2 of a piece of equipment by a contact ring or sheath 3.

The conductive busbar 1 and the connection element 2 are located in line with each other, along a main axis given reference AX, having their ends spaced apart from each other along this axis. The conductive busbar 1 and the connection element 2 are busbars having a diameter corresponding to the diameter of the ring 3. Said ring 3 is suitable for sliding along these busbars 1 and 2 between a position in which it joins them together as shown in Figure 1, in order to connect them together, and a position in which it surrounds only the conductive busbar 1 in such a manner as to disconnect it from the element 2.

The equipment of which the connection element 2 forms a part is provided with a casing or casing portion that presents in the vicinity of the connection element 2 a cylindrical portion 4 that surrounds said element 2 and that ends in a mounting flange 6 of a coupler member. As can be seen in Figures 1 and 2, the portion 4 and the element 2 are coaxial about the main axis AX.

The coupler member proper of the invention is given reference 7. It comprises a stationary cylindrical socket 8 that extends coaxially about the axis AX and the conductive busbar 1, and a generally tubular movable sleeve 9 that is engaged in the free end of the stationary cylindrical socket 8, coaxially about the axis AX.

At its end receiving the movable sleeve 9, the socket 8 includes a flange 11, and in analogous manner the movable sleeve 9 includes a flange 12 at its free end via which said sleeve is fastened to the flange 6 of the casing portion 4, by means of a set of bolts (not shown). A seal 13 is interposed between these flanges 6 and 12 in order to provide sealing at the junction point that they constitute.

The junction point that is formed by the flanges 6 and 12 also encloses a circular panel 14 that has the connection element 2 passing through its central region. Depending on circumstances, the panel 14 may be solid in order to separate the equipment from the sheath surrounding the conductive busbar 1, or, on the contrary, it may include openings to put these two parts of the casing into communication with each other.

At its end remote from the movable sleeve 9, the socket 8 includes means for fastening in leaktight manner to another casing portion or sheath surrounding the conductive busbar 1, which means may be in the form of another flange or the like that is not shown in the figures. The member 7 thus makes it possible to connect a first casing or sheath portion surrounding the busbar 1 to a second casing portion 4 surrounding the connection element 2 of a piece of equipment.

The movable sleeve 9 presents a cylindrical segment 15 having its outside diameter slightly smaller than the inside diameter of the socket 8, so as to allow said sleeve 9 to slide inside the socket 8 in translation along the axis AX.

In the situation of Figure 1, the sleeve 9 is deployed by having its end flange 12 bearing against the flange 6 and fastened thereto by a set of bolts. In the situation of Figure 2, the sleeve 9 is on the contrary retracted in order to have the majority of its cylindrical segment 15 inside the socket 8, and its flange 12 spaced apart from the flange 6. In the situation of Figure 12, an operator can access the ring 3 from the outside in order to move it along the busbar 1.

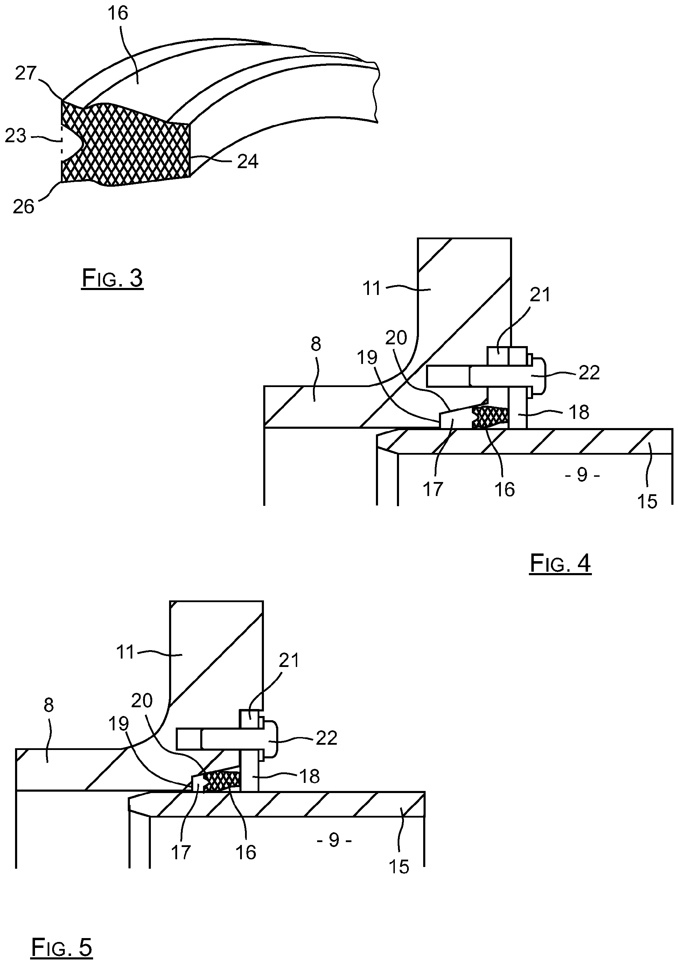

Sealing between the socket 8 and sleeve 9 is provided by a circular sealing gasket 16 that is visible in Figure 3, and that is carried by a tapering circular groove 17 located in the inside edge of the flange 11. This gasket 16 is retained and compressed axially in said groove by an end plate 18 in the form of an annulus or ring.

More particularly, and as visible in Figure 4, the groove 17 is open both towards the front face of the flange and towards the axis AX. It is defined by a plane end wall 19 in the form of a plane annulus of orientation normal to the axis AX and by a flank 20 that is conical, to give to the groove a tapered profile. This groove 17 is extended radially by a circumferential housing 21 receiving the end plate 18.

This circumferential housing 21 thus presents a depth along the axis AX that is less than the depth of the groove 17 and on the contrary it has a diameter that is greater than the diameter of the groove 17 and slightly greater than the outside diameter of the plate 18 in the form of a ring.

This circular gasket 16 may be assembled by engaging the end plate 18 and the circular gasket 16 around the cylindrical segment 15 before partially engaging said cylindrical segment in socket 8. At this stage, the gasket may be put in position inside the tapering circular groove 17, as shown diagrammatically in Figure 4, before coming to press the plate 18 against said gasket, which plate 18 thus becomes engaged in the housing 21. A set of screws 22 each passing through the plate 18 and extending parallel to the axis AX in order to be screwed into the flange 11 can then be installed in order to hold the assembly together, which corresponds to the situation in Figure 4.

At this stage, the screws 22 may be tightened in order to compress the gasket 16 along the axial direction towards the end wall of the groove 17. This axial compression causes the gasket 16 to compress radially as it engages in the tapering circular groove 17. This gasket 16 is then pressed against the outside face of the sleeve 9 and against the conical edge 20 of the groove 17 to form a barrier that separates the inside of the casing and the outside of the casing in leaktight manner.

During installation of the coupler member, the screws 22 may advantageously be loosened so as to take pressure off the gasket 16 in order to allow the sleeve 9 to slide in the socket 8. This makes it possible to adjust the position of the sleeve 9 in order to press its flange 12 against the flange 6 in order to bolt them together. Once the flanges 12 and 6 have been bolted together, the screws 22 can be tightened to compress the gasket 16 in order to obtain the desired sealing.

In similar manner, when the coupler member is in place, it may be convenient to loosen the screws 22 so as to take pressure off the gasket 16 in order to enable the sleeve 9 to slide once its flange has been unbolted.

The gasket 16 that is shown on its own in Figure 3 is made out of elastomer material in order to be compressible, and it may advantageously be lubricated with a lubricant suitable for limiting the force required for tightening the screws 22 in order to compress it in the groove 17.

This circular gasket presents a generally-trapezoidal section and it is engaged in the groove 17 in an orientation that is the opposite of the tapered section of said groove. Thus, the longer of the parallel sides of the trapezoidal section of the gasket, given reference 23, and corresponding to its flared portion, faces the flat end wall of the groove 17, whereas the shorter of its parallel sides, given reference 24, is in contact with the tightening ring 18. In this situation, which is in particular shown in Figures 4 and 5, the two other sides of the trapezoidal outline of the gasket 16 form a very small angle with the axis AX, corresponding substantially to half of the slope of these two sides relative to each other.

In addition, this gasket includes two lips at the vertices of its longer parallel side and given references 26 and 27. These two lips 26 and 27 are in contact respectively with the outside face of the cylindrical segment 15 and with the conical edge of the groove 17.

By means of these two lips, the ability of the gasket to withstand gas pressure is increased, due to the fact that the pressure inside the enclosure that is applied to the gasket tends to splay the lips apart and press them against the cylindrical segment and the groove, which results in improved sealing.

Generally, the invention presented above for application to gas-insulated substations can also apply to other leaktight systems, such as for example to medium- or high-voltage gas-insulated lines.

## Claims

1. A coupler member (7) for coupling together first and second gas-insulated electrical elements, respectively including a first casing and a second casing (4), in order to connect these casings to each other in leaktight manner, while being detachable, said coupler member including a socket (8) fitted with leaktight fastener means for fastening to the first casing and a sleeve (9) fitted with leaktight fastener means (12) for fastening to the second casing (4), the socket (8) and the sleeve (9) both being bodies of revolution, the sleeve (9) being partially engaged in the socket (8) so as to be movable in translation in said socket (8) along a main axis (AX), between a closed, deployed position in which it is fastened to the second casing (4) and an open, retracted position in which it is spaced apart from the second casing (4), the socket (8) presenting a free end (11) comprising an inner circular edge provided with a groove (17) in which a sealing gasket (16) is housed, said groove (17) being defined by a flank (20) constituting a surface of revolution about the main axis (AX), the free end of the socket (8) being fitted with a plate (18) in the form of a ring having clamping screws (22) passing therethrough that are parallel with the main axis (AX) and screwed into the free end of the socket (8) in order to close the groove (17) and to compress the gasket (16) in said groove so that it deploys radially while bearing against the flank (20) and against the sleeve (9), **characterized by** said groove (17) being further defined by a plane end wall (19) in the form of an annulus, of orientation that is perpendicular to the main axis (AX).

2. A member (7) according to claim 1, wherein the flank (20) of the groove (17) has a conical shape giving said groove a tapered section that narrows towards its end wall (19).

3. A member (7) according to claim 2, wherein the gasket (16) presents a section comprising a flared portion (23), and is engaged in the tapered groove (17) so that its flared portion (23) faces the end wall (19) of the groove (17).

4. A member (7) according to claim 3, wherein the flared portion (23) of the gasket (16) comprises two lips (26, 27) coming to bear against the movable sleeve (9) and against the flank (20) of the groove (17).

## Patentansprüche

1. Kopplungselement (7) zum Verbinden von ersten und zweiten gasisolierten elektrischen Elementen, die jeweils ein erstes bzw. zweites Gehäuse (4) umfassen, um diese Gehäuse miteinander in einer leckdichten Weise zu verbinden, während sie dabei lösbar sind, wobei das Kopplungselement eine Hülse (8) umfasst, die mit leckdichten Befestigungsmitteln zum Befestigen am ersten Gehäuse ausgestattet ist, und eine Buchse (9), die mit leckdichten Befestigungsmitteln (12) zum Befestigen am zweiten Gehäuse (4) ausgestattet ist, wobei die Hülse (8) wie auch die Buchse (9) beide Drehkörper sind, wobei die Buchse (9) teilweise im Eingriff in der Hülse (8) ist, um so bei der Verschiebung in der Hülse (8) entlang einer Hauptachse (AX) beweglich zu sein, zwischen einer geschlossenen, implementierten Position, in der sie am zweiten Gehäuse (4) befestigt ist, und einer offenen, zurückgezogenen Position, in der sie einen Abstand vom zweiten Gehäuse (4) hat, wobei die Hülse (8) ein freies Ende (11) präsentiert, das eine innere freie Kante umfasst, die mit einer Nut (17) versehen ist, in der sich ein Dichtungseinsatz (16) befindet, wobei die Nut (17) durch eine Flanke (20) definiert wird, die eine Drehfläche um die Hauptachse (AX) darstellt, wobei das freie Ende der Hülse (8) mit einer Platte (18) in Form eines Rings versehen ist, der Klemmschrauben (22) hat, die durch denselben verlaufen, die parallel zur Hauptachse (AX) sind und in das freie Ende der Hülse (8) geschraubt werden, um die Nut (17) zu verschließen und die Dichtung (16) in die Nut zu pressen, sodass sie sich radial verteilt, während sie gegen die Flanke (20) und gegen die Buchse (9) drückt, **dadurch gekennzeichnet, dass** die Nut (17) ferner durch eine ebene Endwand (19) in Form eines Kreisrings definiert ist mit einer Ausrichtung, die senkrecht zur Hauptachse (AX) ist.

2. Element (7) nach Anspruch 1, wobei die Flanke (20) der Nut (17) eine konische Form hat, die der Nut einen kegelförmigen Abschnitt verleiht, der sich zu seiner Endwand (19) hin verengt.

3. Element (7) nach Anspruch 2, wobei die Dichtung (16) einen Abschnitt darstellt, der einen konisch aufgeweiteten Teil (23) umfasst und in die sich verjüngende Nut (17) eingreift, sodass sein aufgeweiteter Teil (23) der Endwand (19) der Nut (17) gegenüberliegt.

4. Element (7) nach Anspruch 3, wobei der aufgeweitete Teil (23) der Dichtung (16) zwei Lippen (26, 27) umfasst, die gegen die bewegliche Buchse (9) und gegen die Flanke (20) der Nut (17) drücken.

## Revendications

1. Élément de couplage (7) pour coupler conjointement un premier et un second élément électrique isolé par du gaz, comprenant respectivement une première enveloppe et une seconde enveloppe (4) afin de raccorder ces enveloppes l'une à l'autre de manière étanche aux fuites tout en étant détachables, ledit élément de couplage comprenant une douille (8) pourvue de moyens de fixation étanches aux fuites afin de la fixer à la première enveloppe et un manchon (9) pourvu de moyens de fixation étanches aux fuites (12) pour le fixer à la seconde enveloppe (4), la douille (8) et le manchon (9) étant tous deux des corps de révolution, le manchon (9) étant partiellement engagé dans la douille (8) de manière à être mobile en translation dans ladite douille (8) le long d'un axe principal (AX) entre une position déployée fermée dans laquelle il est fixé à la seconde enveloppe (4) et une position rétractée ouverte dans laquelle il est espacé de la seconde enveloppe (4), la douille (8) présentant une extrémité libre (11) comprenant un bord circulaire interne pourvu d'une rainure (17) dans laquelle un joint d'étanchéité (16) est logé, ladite rainure (17) étant définie par un flanc (20) constituant une surface de révolution autour de l'axe principal (AX), l'extrémité libre de la douille (8) étant pourvue d'une plaque (18) sous la forme d'un anneau ayant des vis de serrage (22) qui le traversent et qui sont parallèles à l'axe principal (AX) et vissées dans l'extrémité libre de la douille (8) afin de fermer la rainure (17) et de comprimer le joint (16) dans ladite rainure de manière qu'il se déploie radialement tout en portant contre le flanc (20) et contre le manchon (9), **caractérisé en ce que** ladite rainure (17) est en outre définie par une paroi d'extrémité plane (19) sous la forme d'un anneau d'orientation qui est perpendiculaire à l'axe principal (AX).

2. Élément (7) selon la revendication 1, dans lequel le flanc (20) de la rainure (17) a une forme conique donnant à ladite rainure une section amincie qui se rétrécit vers sa paroi d'extrémité (19).

3. Élément (7) selon la revendication 2, dans lequel le joint (16) présente une section comprenant une partie évasée (23) et est engagé dans la rainure amincie (17) de sorte que sa partie évasée (23) soit tournée vers la paroi d'extrémité (19) de la rainure (17).

4. Élément (7) selon la revendication 3, dans lequel la partie évasée (23) du joint (16) comprend deux lèvres (26, 27) venant porter contre le manchon mobile (9) et contre le flanc (20) de la rainure (17).
